# NEW EUROPEAN PATENT SPECIFICATION

(11) **EP 0 737 031 B2**
(45) Date of publication and mention of the opposition decision: **23.03.2005**
(45) Mention of the grant of the patent: 26.04.2000
(21) Application number: 95935612.2
(22) Date of filing: 17.10.1995
(51) Int. Cl.: A01J 5/017, A01J 7/04

(54) **AN IMPLEMENT FOR MILKING ANIMALS**
VORRICHTUNG ZUM MELKEN VON TIEREN
APPAREIL PERMETTANT DE TRAIRE LES ANIMAUX

(30) Priority: 31.10.1994 NL 9401802
(43) Date of publication of application: 16.10.1996
(73) Proprietor: MAASLAND N.V., 3155 PD Maasland (NL)
(72) Inventor: VAN DER LELY, Ary, NL-3155 PD Maasland (NL); VAN DEN BERG, Karel, NL-2971 BR Bleskensgraaf (NL)
(74) Representative: Corten, Maurice Jean F.M.
(86) International application number: PCT/NL1995/000356
(87) International publication number: WO 1996/013151

(56) References cited:
- EP-A- 0 222 574
- EP-A- 0 277 396
- EP-A- 0 349 019
- EP-A- 0 476 771
- EP-A- 0 630 558
- WO-A-94/12019
- NL-A- 8 602 505

## Description

The invention relates to an implement for milking animals, in accordance with the preamble of claim 1.

Such implements are known, see the article "Robotereinsatz in der Landwirtschaft am Beispiel des Melkens", Tagung Braunschweig-Völkenrode 5./6. Dezember 1950, VDI/MEG Kolboquium Landtechnik. verein Deutscher Ingenieure, Heft 9. The above-defined implement, according to the invention, is characterized by the features of claim 1.

In this case, the cleaning means are preferably active in a cleaning mode and subsequently in a foremilking mode. In particular, during a fraction of the time required for cleaning a teat, foremilk will be removed from this teat. For example, when a teat has been cleaned for about 30 seconds, immediately thereafter foremilk can be removed for a few seconds, i.e. by means of the same cleaning means.

In a first embodiment according to the invention, the cleaning means comprise two rotating elements having a circular cross-section, while, in order to be able to pass from the cleaning mode to the foremilking mode, the distance between these elements is adjustable and/or the two elements are movable in height. In particular the distance between the cleaning elements will be adjustable, when at least one of these elements is capable of being driven eccentrically.

In a second embodiment according to the invention, the cleaning means comprise two rotating elements, while, in order to be able to pass from the cleaning mode to the foremilking mode, at least one of these elements is deformable and/or these elements can be brought in a different position and/or in a different condition of movement in relation to each other. Also in this embodiment it will be possible, when passing from the cleaning mode to the foremilking mode, to make the distance between the cleaning elements adjustable and/or to make the two cleaning elements movable in height. In particular, one of the rotating elements can be deformable in such a way that at its circumference one or a plurality of bulges or recesses can be applied for the purpose of removing foremilk. In this second embodiment it is also possible that at least.one of the rotating elements has an unround shape. In that case, in particular, at least one of the rotating elements can be provided at its circumference with one or a plurality of bulges.

According to an other aspect of the invention, the speed at which the rotating elements are driven and/or the reciprocating motion and/or the eccentric motion of the element or elements can be such that a pulsatory action can be effected on a teat, i.e. with a pulsation frequency which is attuned to the removing of foremilk.

In a third embodiment according to the invention, the cleaning means comprise a rotating element constituted by a central shaft or roller, about which and parallel to which there are arranged a number of satellite rollers. In the foremilking mode, the satellite rollers can be freely rotatable about their own longitudinal axis and, in the cleaning mode, they can be fixed in relation to the central shaft or roller. Depending on the number of satellite rollers, the speed at which the rotating elements are driven can again be such that a pulsatory action can be effected on a teat, i.e. with a pulsation frequency which is attuned to the removing of foremilk.

Both individually and in combination with the aforementioned second or third embodiment, the cleaning means can comprise two rotating elements which are, in relation to each other, adjustable in phase in their direction of rotation, provided that both rotating elements do not have a circular cross-section. This adjustability in phase can depend on the relevant animal.

Also both individually and in combination with any one of the preceding embodiments, the cleaning means can comprise two rotating elements, of which the number of revolutions and/or the mutual distance and/or the extent to which the mutual distance varies on rotation of the elements are adjustable. The number of revolutions, the adjustability of the distance or the adjustability of the extent to which the mutual distance varies on rotation of the elements, can also here again depend on the relevant animal.

According to a further aspect of the invention, the rotating elements in the aforesaid embodiments can be rotatable about a substantially horizontal shaft in a frame which is movable in the longitudinal direction of the room in which the animal to be milked is standing, as well as in a transverse direction and in an upward direction. During a downward motion of the rotating elements, foremilk can be removed.

According to a still further aspect of the invention, a sensor can be provided to detect whether of not foremilk has been removed. This sensor can be located in the same frame, in which the rotating elements are arranged. In a particular embodiment, the sensor is sensitive to temperature. The application of such a sensor enables the removal of foremilk during a fixed time from the moment when foremilk has been detected by the sensor. When the foremilking has started, but after a certain time, e.g. after from three to six seconds, still no foremilk has been detected, the pressure to be exercised on the teats by the means for removing foremilk can be increased. Furthermore, means can be provided to check the foremilk collected, e.g. on colour, electric conducivity, filter resistance, etc., and, depending on the results of this check, to determine the time during which foremilk is removed. The time during which foremilk is removed can again depend on the relative animal. In particular, this time can depend on the time elapsed since the previous milking run of the animal.

Then the foremilk can be discharged to a separate tank.

For abetter understanding of the invention and to show how the same may be carried into effect, reference will now be made, by way of example, to the accompanying drawings, in which:
Figure 1 shows a first embodiment which is not part of the invention in which embodiment, the means for removing foremilk are constituted by a second group of teat cups arranged next to the group of teat cups already present for the milking proper of the animal;
Figure 2 shows an embodiment of the implement according to the invention, in which embodiment, the means for removing foremilk are constituted by the cleaning means for cleaning the teats;
Figure 3 shows the cleaning means active in a cleaning mode and subsequently active in a foremilking mode of the implement represented in Figure 2;
Figure 4A and 4B show a first embodiment of the cleaning means, in which these means comprise two rotating elements having a circular cross-section; in Figure 4A the cleaning means are represented in the foremilking mode, and in Figure 4B in the cleaning mode;
Figure 5 shows the cleaning means constituted by two rotating elements which have a circular cross-section and are both capable of being driven eccentrically;
Figure 6A and 6B show a roller for the cleaning means, which roller is deformable; in Figure 6A the roller is represented in the cleaning mode, and in Figure 6B in the foremilking mode;
Figure 7A and 7B show an other type of roller for the cleaning means, which roller is deformable as well; in Figure 7A the roller is represented in the cleaning mode, and in Figure 7B in the foremilking mode;
Figure 8A and BB show different cleaning means, the two rotating elements having an unround shape; in Figure 8A the cleaning means are represented in the cleaning mode, and in Figure 8B in the foremilking mode;
Figure 9 shows further cleaning means, the two rotating elements comprising four bulges;
Figure 10A, 10B and 10C show the cleaning means of which the rotating elements have three bulges; in Figure 10A the cleaning means are represented in the foremilking mode, Figure 10B shows one of the cleaning rollers moved in phase in relation to the position shown in Figure 10A in order to effect that the foremilking is made more powerfully, and in Figure 10C the cleaning mode is represented, and
Figure 11 shows an embodiment of the cleaning means, of which the rotating elements are composed of a central shaft or roller, about which and parallel to which satellite rollers are arranged.

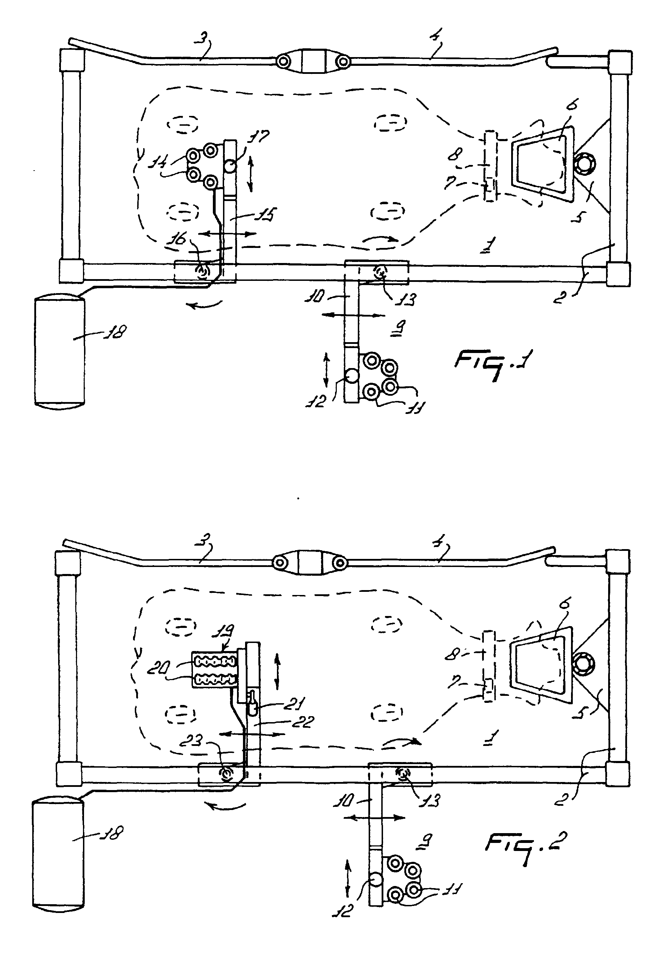

In the embodiment shown in Figure 1 which is not part of the invention, the implement for milking animals, such as cows, comprises a milk box 1, which is confined by a railing 2 and two doors 3 and 4. Through the entrance door 3 an animal can enter the milk box, while the animal can leave the milk box through the exit door 4. Furthermore, the milk box 1 comprises an automatic feeding system 5 including a feed trough 6. Near the feed trough 6, there is arranged a (non-shown) sensor, which is able to cooperate with a transponder 7 and is fitted on the collar 8 of the animal. This sensor is connected to a (non-shown) computer system and together with the transponder 7 constitutes a known per se animal identification system. By means of this animal identification system, animals entering the milk box are identified. After the animal's identification in the milk box, the data known of the relevant animal in the computer are accessible. This file contains the data in respect of the feeding and other data relevant for the milking of the animal. Among these data there are also those concerning the position of the teats of the animal in relation to a certain reference point. Partly on the basis of these data, a milking cluster can be positioned under the udder of the animal. Furthermore the implement is provided with a milking robot 9, which is indicated only schematically in Figure 1. This milking robot comprises a robot arm 10, on the end of which are arranged teat cups 11 and a detector 12, preferably a laser detector. The robot arm 10 is pivotable about the shaft 13 in such a way that the robot arm, which in a condition of rest is arranged outside the milk box, can be pivoted under the udder of the animal; to this effect the robot arm, of course, has to be movable in the longitudinal direction in such a way that it can be positioned under the udder through between a foreleg and a hindleg. Apart from being movable in the longitudinal direction of the milk box, the robot arm 10 is also movable in a transverse and an upward direction. When the robot arm 10, inter alia with the aid of the animal identification data, has been positioned under the udder, the position of the teats can be kept up accurately by means of the laser detector 12 and the cups 11 can subsequently be connected. Then, the milking proper can be started.

However, in practice it is often desirable, and sometimes even prescribed, that, before the milking proper takes place, foremilk is removed. This foremilk may rather often have a negative influence on the quality of the milk; in particular the foremilk in the teat cavity may contain contaminations or be infected somehow. Therefore, the implement is provided with automatically controlled means for removing foremilk before the teat cups for the milking proper of the animal are connected. Consequently, the foremilk can be collected separately from the further milk. In the embodiment represented in Figure 1, these automatically controlled means are constituted by a second group of teat cups 14, which teat cups 14 can be connected to the teats of an animal in the same way as in the case of the teat cups 11 on the robot arm 10. To that end, in the embodiment represented in Figure 1 there is provided a further robot arm 15, which can be pivoted about the shaft 16 under the udder of the animal; of course, also here the robot arm 15 is movable in the longitudinal direction of the milk box in such a way that it can be pivoted between a foreleg and a hindleg. At the end of the robot arm 15 there is arranged the second group of teat cups 14, while furthermore an individual detector 17, preferably a laser detector, may be disposed. Instead of an individual detector on the robot arms 10 and 15, it is also possible to arrange, apart from these two robot arms, a detector which is pivotable under the animal on a separate arm. Like in the case of the robot arm 10, also the robot arm 15 will be movable, besides in the longitudinal direction of the milk box, also in a transverse direction and in an upward direction. The foremilk obtained with the aid of the second group of teat cups can be stored separately in a tank 18.

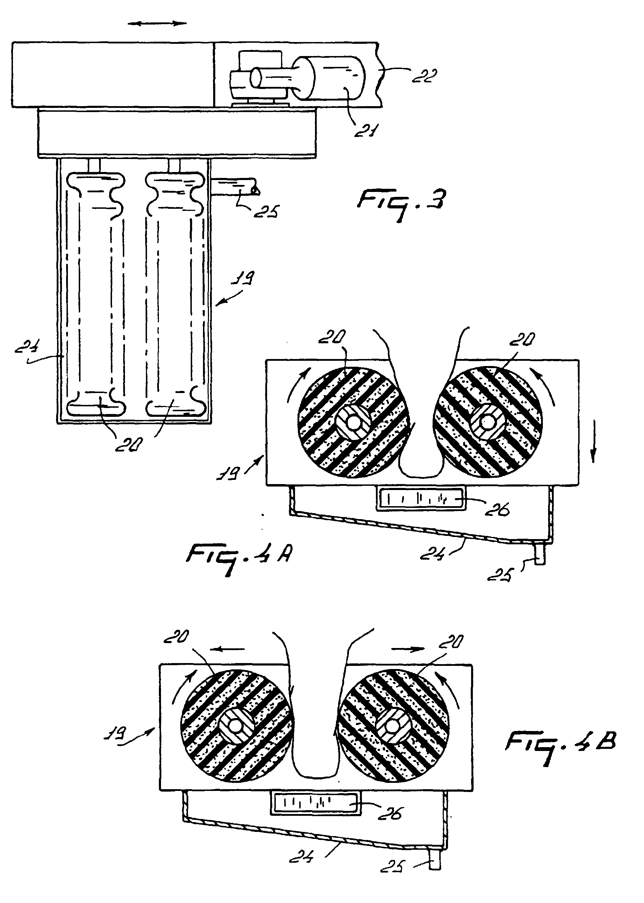

As prior to the milking proper of the animal not only foremilk has to be removed, but also the udder or at least the teats of the animal have to be cleaned, the means for removing foremilk can also be constituted by the cleaning means 19 used therefor. This situation is indicated in the embodiment according to the invention represented in Figure 2. The cleaning means 19 are constituted in this case by a pair of motor-driven cleaning rollers 20. The teats to be cleaned can be drawn between the two rollers 20 and be cleaned by the rotating motion thereof. The cleaning rollers are defined further in Figure 3. Besides, they have been described in full detail in European patent application No. 0 476 771. In the embodiment represented in Figure 2, the cleaning rollers 20, as well as the motor 21 driving same, are disposed near the end of a robot arm 22. Also this robot arm 22 is movable in the longitudinal direction of the milk box, as well as in a transverse direction and in an upward direction. Furthermore, the robot arm is also pivotable about a vertical shaft 23.

In addition to the cleaning of the teats, also the removing of foremilk can be realized with the aid of the two cleaning rollers 20. Consequently, the cleaning means 19 can be active in a cleaning mode, as well as in a foremilking mode, the foremilking mode becoming preferably operative after the cleaning mode and then often only during a fraction of the time required for the cleaning of the teat. There has to be a facility to collect the foremilk removed by means of the cleaning means 19. To that end, a receiver 24 is arranged under the cleaning rollers 20 and the removed foremilk is guided, through a line 25, to the tank 18 disposed for the purpose.

On the side in the lower part of the receiver 24 there is disposed a sensor 26 to detect whether of not foremilk has been removed. The removed foremilk runs in squirts along the front of the sensor 26. When the sensor is composed of a lamp and a photoelectric cell, the foremilk can be detected by light absorption. The sensor can also be placed in the immediate vicinity of the end of a teat, so that the presence of foremilk can be established by means of a temperature measurement. From the moment when foremilk is detected by the sensor 26, foremilk can be removed for a fixed time. In principle, this time will be chosen in such a way that only a few squirts of foremilk, according to the volume of the teat cavity, are removed. When the foremilking has started, but after a certain time, e.g. after from three to six seconds, still no foremilk has been detected, the foremilking can be intensified, i.e. the pressure to be exercised on the teats by the means for removing foremilk can be increased. The time during which foremilk is removed can be adjusted for the separate animals individually. Furthermore, this time can depend on the time elapsed since the previous milking run of the animal. When foremilk has been collected in the receiver 24, it can first be examined prior to being transported through the line 25 to the tank 18. The means provided to check the foremilk collected may react e.g. to the colour, the electric conductivity, the filter resistance, etc. of the foremilk. When the system reacts sufficiently prompt, depending on the results of this check, the time during which foremilk is removed can be adjusted.

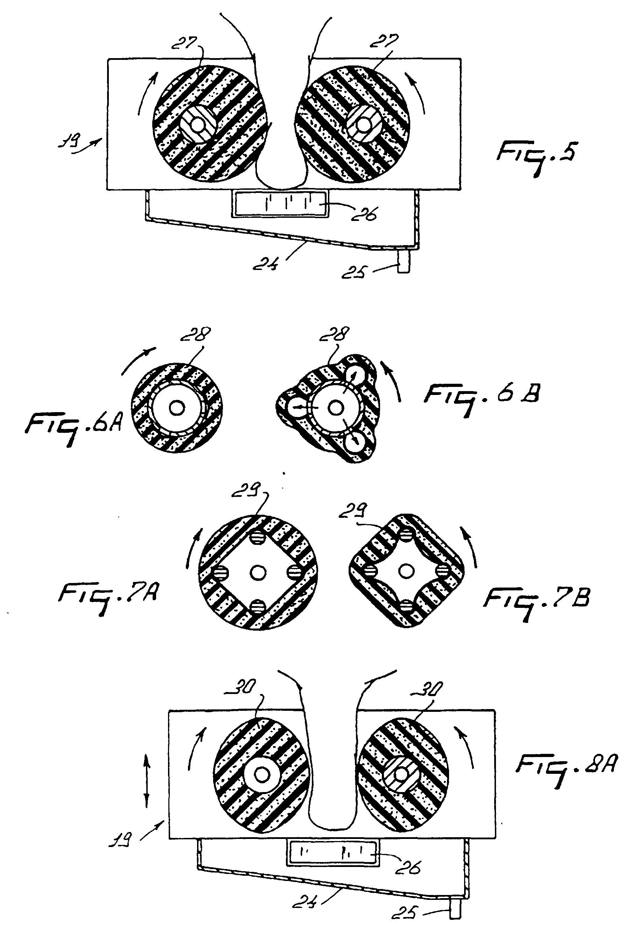

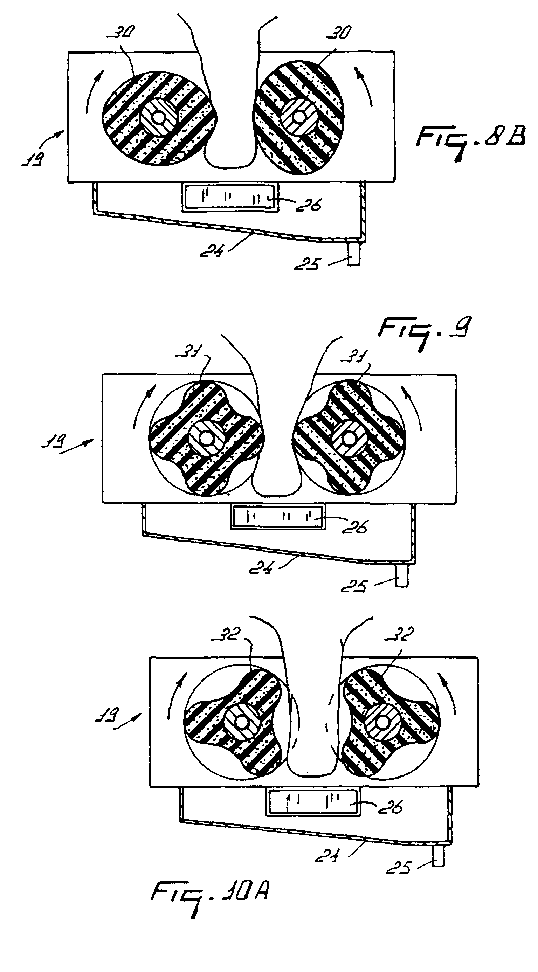

Figures 4A and 4B show the cleaning means 19 for a first embodiment. In Figure 4A the cleaning means 19 are represented in the foremilking mode, and in Figure 4B in the cleaning mode. The cleaning means 19 comprise two cleaning rollers 20 having a circular cross-section. In the longitudinal direction, these rollers 20 extend accordion-like, as indicated in Figure 3, so that the teats drawn between the rollers 20 will come into contact therewith as much as possible. The direction of rotation of the rollers 20 is such that they move along the teat from top to bottom. In this way, both the teat is drawn between the rollers and dirt is discharged downwards. If required, the rollers may be moistened, e.g. from the inside by a supply of water through a tube which is concentric with the drive shaft of the rollers. In the foremilking mode, the distance between the two rollers is smaller than in the cleaning mode. Because of this, the pressure exercised on the teats is greater in the foremilking mode. The rotating motion of the rollers can furthermore be combined with a motion in vertical direction downwards, which downward motion of the cleaning means will be such that only a few squirts of foremilk will be removed from the teat. In the cleaning mode represented in Figure 4B, the distance between the rollers is somewhat increased, due to which the pressure of the cleaning rollers on the teat is somewhat reduced and the teat can be cleaned without milk being removed.

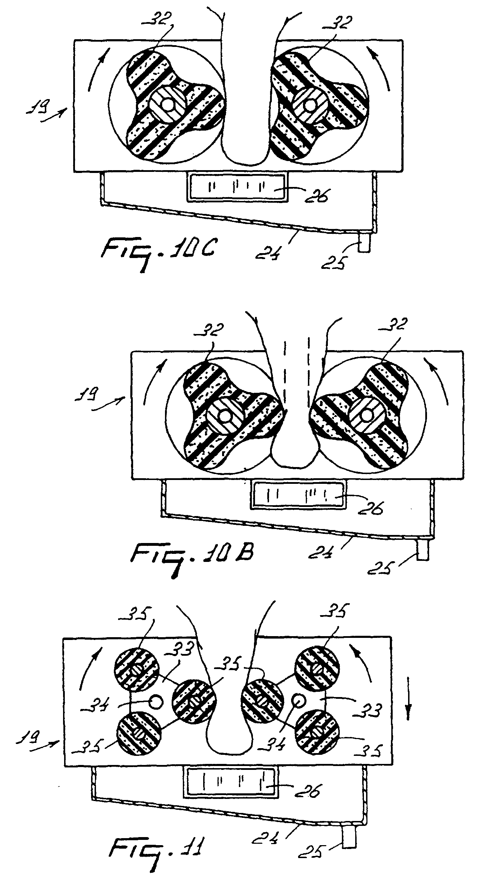

Although, in the embodiment shown in Figure 5, the two rotating elements 27 have a circular cross-section, they are capable of being driven eccentrically. Also in this embodiment, the direction of rotation of the rollers is such that they move downwards along the teat. Furthermore, because of the possibility of eccentric driving, a variable pressure can be exercised on the teat. By the eccentric motion, therefore, a pulsatory action is effected on a teat, while the pulsation frequency can be attuned to the removing of foremilk. Due to a greater distance between the two rollers 27, possibly combined with a movability in height of the cleaning means 19, the rollers 27 in this configuration can be adjusted for the cleaning mode. Besides, a more or less similar action can also be obtained by fitting the drive shaft in the middle of the rollers and by subsequently driving the shaft eccentrically.

In Figures 6A and 6B there is shown one individual roller 28 of a pair of rollers for the cleaning means 19. In Figure 6A the roller 28 is represented in the cleaning mode and in Figure 6B in the foremilking mode. In this embodiment, the roller 28 is deformable. This deformability can be effected by pressing air into the inside of the roller and by making on the inside a number of perforations, through which the air can exert a force in radial outward direction on the material enveloping the roller 28. Due to this deformability, the roller 28 can be given an unround shape in the foremilking mode, so that, when driving the roller 28, again a pulsatory action is effected on the teat, the pulsating frequency of which again can be attuned to the removal of foremilk. Although, when applying in the cleaning means a roller of the type shown, the distance between the rollers can remain constant and it not being necessary per se that the cleaning means are movable in the vertical direction, this adjustability of distance and of movability in height can be combined with the deformability of the roller, which can be important when the deformability of the roller is only very restricted.

In Figures 7A and 7B there is represented an other embodiment of a roller 29 for the cleaning means 19. Also in this case, the roller is deformable; this time, however, because air is drained off from the inside of the roller 29, which gives it an unround shape. In this embodiment, the distance between the rollers will have to be adjustable in order to ensure that, when a roller is deformed, nevertheless a greater pressure is exercised on the teat, which is required for the removing of foremilk. Also in this case, the unround shape will effect a pulsatory action on the teat. Both in the embodiment shown by Figures 6A and 6B and in that of Figures 7A and 7B, one roller as well as both rollers can be deformable.

In the embodiment of the cleaning means 19 shown in Figures 8A and 8B, the cleaning rollers 30 have an unround shape, in particular an ellipse-like shape. In Figure 8A the cleaning means 19 are shown in the foremilking mode and in Figure 8B in the cleaning mode. In the cleaning mode, the rollers are shifted 90° in phase in relation to the position taken up by the rollers relative to each other in the foremilking mode. Also in this embodiment, in the foremilking mode, a pulsatory action is effected on the teat, while the pulsation frequency can again be attuned to the removing of foremilk. For removing foremilk, the motion of the rollers 30 can also here again be combined with a motion in height of the cleaning means 19. Due to the fact that in the cleaning mode the rollers 30 are shifted in phase relative to each other, also in this situation a pulsatory action is effected on the teat, but less intensively and to such an extent that no foremilk is removed and the teats are only cleaned.

In Figure 9 there is represented an embodiment of the cleaning means 19, in which embodiment the cleaning rollers 31, according to the accordion-like extension of the rollers as shown in Figure 3, have, a number of times subsequently, a circular cross-section and, thereafter, a cross-section with four bulges. In the represented position of the rollers 31 relative to each other, the cleaning means 19 are in the foremilking mode, while, also here, by shifting one of the rollers 45° in phase in relation to the other one, the cleaning means 19 can be active in the cleaning mode.

In Figures 10A, 10B and 10C there is represented a further embodiment of the cleaning means 19, in which embodiment the cleaning rollers 32, according to the accordion-like extension as shown in Figure 3, have, a number of times subsequently, a circular cross-section and, thereafter, a cross-section with three bulges. In Figure 10A the rollers 32 are represented in the foremilking mode, while again a pulsatory action is effected on the teats. When the force exerted on the teats is not sufficient to enable the removing of foremilk, the distance between the rollers 32 can be reduced somewhat, so that a greater force is exerted on the teats. This situation is shown in Figure 10B. In Figure 10C, one roller is shifted 60° in phase relative to the other one, at least in comparison with the position of the rollers in the foremilking mode. In the position represented in Figure 10C, the cleaning means 19 are in the cleaning mode.

In the embodiment of the cleaning means 19 shown in Figure 11, the rollers 33 are composed of a central shaft or roller 34, around which there are arranged three satellite rollers 35. In the cleaning mode, the satellite rollers 35 can be fixed relative to the axis or roller 34, so that upon rotation of the roller 33, possibly in combination with a downward motion of the satellite rollers, the latter rollers are moved along the teats in a downward direction, so that a cleaning action is effected on the teats. When the satellite rollers 35 are freely rotatable relative to the axis or roller 34, the rotation of the roller 33 will only effect a pulsatory action on the teat, which, possibly by adjusting the mutual distance between the satellite rollers, is such that foremilk can be removed.

In any design of the rollers, the distance between the rollers should preferably always be adjustable, and the cleaning means always be movable in height, so that in all cases the pressure exercised on the teats by the rollers, whether they are circular or have an unround shape or are shiftable in phase relative to each other or are deformable, can always be adjusted in such a way that foremilk can be removed.

## Claims

1. An implement for milking animals, such as cows, comprising a milk box (1) including a milking robot (9) for automatically connecting teat cups (11) to, respectively disconnecting them from the teats of an animal, and for automatically milking this animal, the milk box having cleaning means for automatically cleaning the teats of the animal before the teat cups (11) are connected thereto, the milk box comprising means (14, 19) for automatically removing foremilk from the teats of the animal, which can be activated before the teat cup (11) is connected for milking the usable milk of said animal, **characterized in that** the means for removing foremilk are constituted by the cleaning means (19).

2. An implement as claimed in claim 1, **characterized in that** the cleaning means (19) are active in a cleaning mode and subsequently in a foremilking mode.

3. An implement as claimed in claim 1, **characterized in that** during a fraction of the time required for cleaning a teat, foremilk is removed from this teat.

4. An implement as claimed in claim 2 or 3, **characterized in that** the cleaning means (19) comprise two rotating elements (20) having a circular cross-section, while, in order to be able to pass from the cleaning mode to the foremilking mode, the distance between these elements (20) is adjustable and/or the two elements (20) are movable in height.

5. An implement as claimed in claim 4, **characterized in that** at least one of the rotating elements (20) is capable of being driven eccentrically.

6. An implement as claimed in claim 2 or 3, **characterized in that** the cleaning means (19) comprise two rotating elements (20), while, in order to be able to pass from the cleaning mode to the foremilking mode, at least one of these elements (28, 29) is deformable and/or these elements (20, 27, 30, 31, 32, 33) can be brought in a different position and/or in a different condition of movement in relation to each other.

7. An implement as claimed in claim 6, **characterized in that, in** order to be able to pass from the cleaning mode to the foremilking mode, also the distance between these elements (20, 27-33) is adjustable and/or these elements (20, 27-33) are movable in height.

8. An implement as claimed in claim 6 or 7, **characterized in that** at least one of the rotating elements (28, 29) can be deformed in such a way that at its circumference one or a plurality of bulges or recesses can be applied for the purpose of removing foremilk.

9. An implement as claimed in claim 6 or 7, **characterized in that** at least one of the rotating elements (30-33) has an unround shape.

10. An implement as claimed in claim 9, **characterized in that** at least one of the rotating elements (30-32) has at its circumference one or a plurality of bulges.

11. An implement as claimed in any one of claims 4 to 10, **characterized in that** the speed at which the rotating elements (20, 27-33) are driven and/or the reciprocating motion and/or the eccentric motion of the element or elements is such that a pulsatory action can be effected on a teat, i.e. with a pulsation frequency which is attuned to the removing of foremilk.

12. An implement as claimed in claim 4, **characterized in that** a rotating element (33) is composed of a central shaft or roller (34), about which and parallel to which there are arranged a number of satellite rollers (35).

13. An implement as claimed in claim 12, **characterized in that,** in the foremilking mode, the satellite rollers (35) are freely rotatable about their own longitudinal axis and, in the cleaning mode, they are fixed in relation to the central shaft or roller (34).

14. An implement as claimed in the claims 12 or 13, **characterized in that** the speed at which the rotating elements (33) are driven, depending on the number of satellite rollers (35), is such that a pulsatory action can be effected on a teat, i.e. with a pulsation frequency which is attuned to the removing of foremilk.

15. An implement as claimed in any one of claims 2 to 14, **characterized in that** the cleaning means (19) comprise two rotating elements (30-33) which are, in relation to each other, adjustable in phase in their direction of rotation, provided that both rotating elements do not have a circular cross-section.

16. An implement as claimed in claim 15, **characterized in that** the adjustability in phase depends on the relevant animal.

17. An implement as claimed in any one of the claims 2 to 16, **characterized in that** the cleaning means (19) comprise two rotating elements (20, 27-33), of which the number of revolutions and/or the mutual distance and/or the extent to which the mutual distance varies on rotation of the elements are adjustable.

18. An implement as claimed in claim 17, **characterized in that** the number of revolutions, the adjustability of the distance or the adjustability of the extent to which the mutual distance varies on rotation of the elements depends on the relevant animal.

19. An implement as claimed in any one of claims 4 to 18, **characterized in that** the rotating elements (20, 27-33) are rotatable about a substantially horizontal shaft in a frame which is movable in the longitudinal direction of the room in which the animal to be milked is standing, as well as in a transverse direction and in an upward direction.

20. An implement as claimed in claim 19, **characterized in that** during a downward motion of the rotating elements (20, 27-33) foremilk is removed.

21. An implement as claimed in any one of the preceding claims, **characterized in that** there is provided a sensor (26) to detect whether or not foremilk has been removed.

22. An implement as claimed in claim 21, **characterized in that** the sensor (26) is located in the same frame, in which the rotating elements (20, 27-33) are arranged.

23. An implement as claimed in claim 21 or 22, **characterized in that** the sensor (26) is sensitive to temperature.

24. An implement as claimed in any one of claims 21 to 23, **characterized in that** foremilk is removed during a fixed time from the moment when foremilk is detected by the sensor (26).

25. An implement as claimed in any one of the claims 21 to 24, **characterized in that,** when the removing of foremilk has started, but after a certain time, e.g. after from three to six seconds, still no foremilk has been detected, the pressure to be exercised on the teats by the means for removing foremilk can be increased.

26. An implement as claimed in any one of claims 21 to 25, **characterized in that** there are provided means to check the foremilk collected, e.g. on colour, electric conductivity, filter resistance, etc., and, depending on the results of this check, to determine the time during which foremilk is removed.

27. An implement as claimed in any one of the preceding claims, **characterized in that** the time during which foremilk is removed depends on the relative animal.

28. An implement as claimed in claim 27, **characterized in that** the time during which foremilk is removed depends on the time elapsed since the previous milking run of the animal.

29. An implement as claimed in any one of the preceding claims, **characterized in that** the foremilk is discharged to a separate tank (18). ,

## Patentansprüche

1. Vorrichtung zum Melken von Tieren, wie z. B. Kühen, mit einer Melkbox (1) und einem Melkroboter (9) zum automatischen Anschließen von Zitzenbechern (11) an bzw. Abnehmen derselben von den Zitzen eines Tieres und zum automatischen Melken dieses Tieres, wobei die Melkbox Reinigungsmittel zum automatischen Reinigen der Zitzen des Tieres vor Anschluß der Zitzenbecher (11) an dieselben aufweist, wobei die Melkbox Mittel (14, 19) zum automatischen Entfernen von Vorgemelk aus den Zitzen des Tieres aufweist, die aktivierbar sind, bevor der Zitzenbecher (11) zum Melken der verwendbaren Milch des Tieres angeschlossen wird,
**dadurch gekennzeichnet, daß** die Mittel zum Entfernen von Vorgemelk durch die Reinigungsmittel (19) gebildet sind.

2. Vorrichtung nach Anspruch 1,
**dadurch gekennzeichnet, daß** die Reinigungsmittel (19) in einem Reinigungsmodus und anschließend in einem Vormelkmodus wirksam sind.

3. Vorrichtung nach Anspruch 1,
**dadurch gekennzeichnet, daß** in einem Bruchteil der Zeit, die zum Reinigen einer Zitze erforderlich ist, aus dieser Zitze Vorgemelk entfernt wird.

4. Vorrichtung nach Anspruch 2 oder 3,
**dadurch gekennzeichnet, daß** die Reinigungsmittel (19) zwei rotierende Elemente (20) mit kreisrundem Querschnitt aufweisen, wobei der Abstand zwischen diesen Elementen (20) verstellbar ist und/oder die beiden Elemente (20) höhenbewegbar sind, um vom Reinigungsmodus in den Vormelkmodus wechseln zu können.

5. Vorrichtung nach Anspruch 4,
**dadurch gekennzeichnet, daß** mindestens eines der rotierenden Elemente (20) exzentrisch antreibbar ist.

6. Vorrichtung nach Anspruch 2 oder 3,
**dadurch gekennzeichnet, daß** die Reinigungsmittel (19) zwei rotierende Elemente (20) aufweisen, wobei zum Wechseln vom Reinigungsmodus in den Vormelkmodus mindestens eines dieser Elemente (28, 29) verformbar ist und/oder diese Elemente (20, 27, 30, 31, 32, 33) relativ zueinander in eine andere Position und/oder in eine andere Bewegungsart bringbar sind.

7. Vorrichtung nach Anspruch 6,
**dadurch gekennzeichnet, daß** zum Wechseln vom Reinigungsmodus in den Vormelkmodus auch der Abstand zwischen diesen Elementen (20, 27 bis 33) verstellbar ist und/oder diese Elemente (20, 27 bis 33) höhenbewegbar sind.

8. Vorrichtung nach Anspruch 6 oder 7,
**dadurch gekennzeichnet, daß** mindestens eines der rotierenden Elemente (28, 29) zum Zwecke des Entfernens von Vorgemelk derart verformbar ist, daß an seinem Umfang eine oder mehrere Ausbuchtungen oder Ausnehmungen zu bilden sind.

9. Vorrichtung nach Anspruch 6 oder 7,
**dadurch gekennzeichnet, daß** mindestens eines der rotierenden Elemente (30 bis 33) eine unrunde Form hat.

10. Vorrichtung nach Anspruch 9,
**dadurch gekennzeichnet, daß** mindestens eines der rotierenden Elemente (30 bis 32) an seinem Umfang eine oder mehrere Ausbuchtungen aufweist.

11. Vorrichtung nach einem der Ansprüche 4 bis 10,
**dadurch gekennzeichnet, daß** die Geschwindigkeit, mit der die rotierenden Elemente (20, 27 bis 33) angetrieben werden, und/oder die hin- und hergehende Bewegung und/oder die exzentrische Bewegung des oder der Elemente derart ist, daß eine pulsierende Wirkung auf eine Zitze ausübbar ist, und zwar mit einer Pulsierfrequenz, die auf das Entfernen von Vorgemelk abgestimmt ist.

12. Vorrichtung nach Anspruch 4,
**dadurch gekennzeichnet, daß** sich ein rotierendes Element (33) aus einer mittleren Welle oder Rolle (34) zusammensetzt, um die herum eine Anzahl von parallel zu ihr ausgerichteten Satellitenrollen (35) angeordnet sind.

13. Vorrichtung nach Anspruch 12,
**dadurch gekennzeichnet, daß** die Satellitenrollen (35) im Vormelkmodus um ihre eigene Längsachse frei drehbar und im Reinigungsmodus relativ zur mittleren Welle oder Rolle (34) festgelegt sind.

14. Vorrichtung nach Anspruch 12 oder 13,
**dadurch gekennzeichnet, daß** die Geschwindigkeit, mit der die rotierenden Elemente (33) in Abhängigkeit von der Anzahl der Satellitenrollen (35) angetrieben werden, so gewählt ist, daß eine pulsierende Wirkung auf eine Zitze ausübbar ist, und zwar mit einer Pulsierfrequenz, die auf das Entfernen von Vorgemelk abgestimmt ist.

15. Vorrichtung nach einem der Ansprüche 2 bis 14,
**dadurch gekennzeichnet, daß** die Reinigungsmittel (19) zwei rotierende Elemente (30 bis 33) umfassen, deren Phasen in Drehrichtung aufeinander abstimmbar sind, sofern die beiden rotierenden Elemente keinen kreisrunden Querschnitt aufweisen.

16. Vorrichtung nach Anspruch 15,
**dadurch gekennzeichnet, daß** die Abstimmbarkeit der Phasen von dem jeweiligen Tier abhängt.

17. Vorrichtung nach einem der Ansprüche 2 bis 16,
**dadurch gekennzeichnet, daß** die Reinigungsmittel (19) zwei rotierende Elemente (20, 27 bis 33) aufweisen, bei denen die Drehzahl und/oder der Abstand zueinander und/oder das Maß, in dem sich der Abstand zueinander beim Drehen der Elemente ändert, einstellbar ist.

18. Vorrichtung nach Anspruch 17,
**dadurch gekennzeichnet, daß** die Drehzahl, die Einstellbarkeit des Abstandes oder die Einstellbarkeit des Maßes, in dem sich der Abstand zueinander beim Drehen der Elemente ändert, von dem jeweiligen Tier abhängt.

19. Vorrichtung nach einem der Ansprüche 4 bis 18,
**dadurch gekennzeichnet, daß** die rotierenden Elemente (20, 27 bis 33) um eine im wesentlichen horizontale Achse in einem Rahmen drehbar sind, der in Längsrichtung des Raumes, in dem das zu melkende Tier steht, sowie in Querrichtung und in Aufwärtsrichtung bewegbar ist.

20. Vorrichtung nach Anspruch 19,
**dadurch gekennzeichnet, daß** während einer Abwärtsbewegung der rotierenden Elemente (20, 27 bis 33) Vorgemelk entfernt wird.

21. Vorrichtung nach einem der vorhergehenden Ansprüche,
**dadurch gekennzeichnet, daß** ein Sensor (26) vorhanden ist, um festzustellen, ob Vorgemelk entfernt worden ist oder nicht.

22. Vorrichtung nach Anspruch 21,
**dadurch gekennzeichnet, daß** der Sensor (26) in demselben Rahmen wie die rotierenden Elemente (20, 27 bis 33) angeordnet ist.

23. Vorrichtung nach Anspruch 21 oder 22,
**dadurch gekennzeichnet, daß** der Sensor (26) auf Temperatur anspricht.

24. Vorrichtung nach einem der Ansprüche 21 bis 23,
**dadurch gekennzeichnet, daß** das Entfernen von Vorgemelk während eines festgelegten Zeitraumes ab dem Zeitpunkt erfolgt, zu dem von dem Sensor (26) Vorgemelk ermittelt wird.

25. Vorrichtung nach einem der Ansprüche 21 bis 24,
**dadurch gekennzeichnet, daß** der von den Mitteln zum Entfernen von Vorgemelk auf die Zitzen auszuübende Druck erhöhbar ist, wenn das Entfernen von Vorgemelk begonnen hat, aber nach einer bestimmten Zeit, beispielsweise nach drei bis sechs Sekunden, noch kein Vorgemelk ermittelt worden ist.

26. Vorrichtung nach einem der Ansprüche 21 bis 25,
**dadurch gekennzeichnet, daß** Mittel vorhanden sind, um z. B. die Farbe, die elektrische Leitfähigkeit, den Filterströmungswiderstand, usw. des gewonnenen Vorgemelkes zu prüfen und in Abhängigkeit von den Ergebnissen dieser Prüfung die Zeit zu bestimmen, während der Vorgemelk entfernt wird.

27. Vorrichtung nach einem der vorhergehenden Ansprüche,
**dadurch gekennzeichnet, daß** die Zeit, während der Vorgemelk entfernt wird, von dem jeweiligen Tier abhängt.

28. Vorrichtung nach Anspruch 27,
**dadurch gekennzeichnet, daß** die Zeit, während der Vorgemelk entfernt wird, von der Zeit abhängt, die seit dem vorhergehenden Melken des Tieres verstrichen ist.

29. Vorrichtung nach einem der vorhergehenden Ansprüche,
**dadurch gekennzeichnet, daß** das Vorgemelk in einen getrennten Behälter (18) abgeführt wird.

## Revendications

1. Appareil pour traire des animaux, tels que des vaches, comportant un box de traite (1) qui inclut un robot de traite (9) pour connecter automatiquement des gobelets trayeurs (11) aux trayons d'un animal et les déconnecter respectivement et pour traire automatique cet aninal, le box de traite ayant des moyens de nettoyage pour nettoyer automatiquement les trayons de l'animal avant que les gobelets trayeurs (11) ne soient connectés à ceux-ci, le box de traite comportant des moyens (14, 19) pour enlever automatiquement le premier lait des trayeurs de l'animal, qui peuvent être activés avant que le gobelet trayeur (11) ne soit connecté pour traire le lait utilisable dudit animal,
**caractérisé en ce que** les moyens pour enlever le premier lait sont constitués par les moyens de nettoyage (19).

2. Appareil selon la revendication 1, **caractérisé en ce que** les moyens de nettoyage (19) sont actifs dans un mode de nettoyage et par la suite dans un mode de traite de premier lait.

3. Appareil selon la revendication 1, **caractérisé en ce que** pendant une fraction du temps nécessaire pour nettoyer un trayon, le premier lait est enlevé de ce trayon.

4. Appareil selon la revendication 2 ou 3, **caractérisé en ce que** les moyens de nettoyage (19) comportent deux éléments rotatifs (20) ayant une section transversale circulaire, alors que, afin de pouvoir passer du mode de nettoyage au mode de traite du premier lait, la distance entre ces éléments (20) peut être ajustée et/ou les deux éléments (20) sont mobiles en hauteur.

5. Appareil selon la revendication 4, **caractérisé en ce qu'**au moins un des éléments rotatifs (20) peut être entraîné de manière excentrée.

6. Appareil selon la revendication 2 ou 3, **caractérisé en ce que** les moyens de nettoyage (19) comportent deux éléments rotatifs (20), alors que, afin de pouvoir passer du mode de nettoyage au mode de traite de premier lait, au moins un de ces éléments (28, 29) est déformable et/ou ces éléments (20, 27, 30, 31, 32, 33) peuvent être amenés dans une position différente et/ou dans un état de déplacement différent l'un par rapport à l'autre.

7. Appareil selon la revendication 6, **caractérisé en ce que**, afin de pouvoir passer du mode de nettoyage au mode de traite de premier lait, la distance entre ces éléments (20, 27 à 33) peut aussi être ajustée et/ou ces éléments (20, 27 à 33) sont mobiles en hauteur.

8. Appareil selon la revendication 6 ou 7, **caractérisé en ce qu'**au moins un des éléments rotatifs (28, 29) peut être déformé de manière telle qu'au niveau de sa périphérie un ou plusieurs renflements ou une ou plusieurs cavités peuvent être appliqués dans le but d'enlever le premier lait.

9. Appareil selon la revendication 6 ou 7, **caractérisé en ce qu'**au moins un des éléments rotatifs (30 à 33) a une forme non-circulaire.

10. Appareil selon la revendication 9, **caractérisé en ce qu'**au moins des éléments rotatifs (30 à 32) a au niveau de sa périphérie un ou plusieurs renflements.

11. Appareil selon l'une quelconque des revendications 4 à 10, **caractérisé en ce que** la vitesse à laquelle les éléments rotatifs (20, 27 à 33) sont entraînés et/ou le mouvement en va-et-vient et/ou le mouvement excentré de l'élément ou des éléments est tel qu'une action pulsatoire peut être effectuée sur un trayon, c'est-à-dire à l'aide d'une fréquence de pulsation qui est harmonisée avec l'enlèvement du premier lait.

12. Appareil selon la revendication 4, **caractérisé en ce qu'**un élément rotatif (33) est composé d'un arbre central ou rouleau (34), autour duquel sont agencés, parallèlement à celui-ci, plusieurs rouleaux satellites (35).

13. Appareil selon la revendication 12, **caractérisé en ce que**, dans le mode de traite de premier lait, les rouleaux satellites (35) sont librement rotatifs autour de leur propre axe longitudinal et, dans le mode de nettoyage, ils sont fixés par rapport à l'axe central ou rouleau (34).

14. Appareil selon la revendication 12 ou 13, **caractérisé en ce que** la vitesse à laquelle les éléments rotatifs (33) sont entraînés, en fonction du nombre de rouleaux satellites (35), est telle qu'une action pulsatoire peut être effectuée sur un trayon c'est-à-dire avec une fréquence de pulsation qui est harmonisée avec l'enlèvement du premier lait.

15. Appareil selon l'une quelconque des revendications 2 à 14, **caractérisé en ce que** les moyens de nettoyage (19) comportent deux éléments rotatifs (30 à 33) qui peuvent, l'un par rapport à l'autre, être ajustés en phase dans leur sens de rotation, pourvu que les deux éléments rotatifs n'aient pas une section transversale circulaire.

16. Appareil selon la revendication 15, **caractérisé en ce que** la capacité d'ajustement en phase est fonction de l'animal concerné.

17. Appareil selon l'une quelconque des revendications 2 à 16, **caractérisé en ce que** les moyens de nettoyage (19) comportent deux éléments rotatifs (20, 27-33) dont le nombre de tours et/ou la distance mutuelle et/ou la plage dans laquelle la distance mutuelle varie lors de la mise en rotation des éléments, peuvent être ajustés.

18. Appareil selon la revendication 17, **caractérisé en ce que** le nombre de tours, la capacité d'ajustement de la distance ou la capacité d'ajustement de la plage dans laquelle la distance mutuelle varie lors de la mise en rotation des éléments, est fonction de l'animal concerné.

19. Appareil selon l'une quelconque des revendications 4 à 18, **caractérisé en ce que** les éléments rotatifs (20, 27 à 33) sont rotatifs autour d'un arbre sensiblement horizontal dans un châssis qui est mobile dans la direction longitudinale de la pièce dans laquelle se trouve l'animal à traire, ainsi que dans une direction transversale et dans une direction dirigée vers le haut.

20. Appareil selon la revendication 19, **caractérisé en ce que** pendant un mouvement vers le bas des éléments rotatifs (20, 27 à 33) du premier lait est enlevé.

21. Appareil selon l'une quelconque des revendications précédentes,
**caractérisé en ce qu'**un capteur (26) est fourni pour détecter si oui ou non du premier lait a été enlevé.

22. Appareil selon la revendication 21, **caractérisé en ce que** le capteur (26) est positionné dans le même châssis que celui dans lequel les éléments rotatifs (20, 27 à 33) sont agencés.

23. Appareil selon la revendication 21 ou 22, **caractérisé en ce que** le capteur (26) est sensible à la température.

24. Appareil selon l'une quelconque des revendications 21 à 23, **caractérisé en ce que** le premier lait est enlevé pendant un temps fixé à partir du moment où du premier lait est détecté par le capteur (26) ;

25. Appareil selon l'une quelconque des revendications 21 à 24, **caractérisé en ce que**, lorsque l'enlèvement du premier lait a démarré, mais qu'après un certain temps, par exemple après trois à six secondes, on ne détecte pas encore de premier lait, la pression à exercer sur les trayons par les moyens destinés à enlever le premier lait peut être augmentée.

26. Appareil selon l'une quelconque des revendications 21 à 25, **caractérisé en ce que** des moyens sont fournis pour contrôler le premier lait collecté, par exemple la couleur, la conductivité électrique, la résistance à la filtration, etc. et, en fonction des résultats de ce contrôle, pour déterminer le temps pendant lequel le premier lait est enlevé.

27. Appareil selon l'une quelconque des revendications précédentes,
**caractérisé en ce que** le temps pendant lequel du premier lait est enlevé est fonction de l'animal concerné.

28. Appareil selon la revendication 27, **caractérisé en ce que** le temps pendant lequel du premier lait est enlevé est fonction du temps écoulé depuis que la traite précédente de l'animal.

29. Appareil selon l'une quelconque des revendications précédentes,
**caractérisé en ce que** le premier lait est évacué vers un réservoir séparé (18).
